# EUROPEAN PATENT APPLICATION

(11) **EP 4 609 762 A1**
(43) Date of publication of application: **03.09.2025**
(21) Application number: 24160057.6
(22) Date of filing: 27.02.2024
(51) Int. Cl.: A47J 31/36

(54) **BEVERAGE MACHINE HAVING A GRANULAR MATERIAL DISPENSER AND A LIQUID DISPENSER**

(71) Applicant: Versuni Holding B.V., 5656 AE Eindhoven (NL)
(72) Inventor: NOORDHUIS, Joeke, 5656 AE Eindhoven (NL); WESTRUP, Gert, 5656 AE Eindhoven (NL); AALFS, Daniel, 5656 AE Eindhoven (NL); VAN OPSTAL, Edwin, 5656 AE Eindhoven (NL); VAN BOXTEL, Jaap, 5656 AE Eindhoven (NL)
(74) Representative: Vollering, Stefanus Franciscus Maria

(57) **Abstract**

Provided is a beverage machine (100), such as a coffee machine. The beverage machine includes a brewing vessel assembly (101) that comprises a brewing vessel (102). The beverage machine also includes a granular material dispenser (105) having a granular material outlet through which granular material is dispensable into the brewing vessel, and a liquid dispenser (110) having a liquid outlet and a hydraulic system for delivering liquid into the brewing vessel via the liquid outlet. The brewing vessel assembly and the liquid outlet are moveable relative to each other to enable adoption of a brewing configuration in which the brewing vessel is arranged to receive the liquid via the liquid outlet. The hydraulic system comprises a hydraulic mechanism that is moveable via movement of liquid in the hydraulic system to cause the brewing vessel assembly and the granular material outlet to move away from each other during adoption of the brewing configuration.

## Description

### FIELD OF THE INVENTION

The invention relates to a beverage machine, such as a coffee machine, having a granular material dispenser for dispensing granular material, e.g. ground coffee, into a brewing vessel, and a liquid dispenser for dispensing liquid, e.g. heated water, into the brewing vessel.

### BACKGROUND OF THE INVENTION

There are many different types of commercially available beverage machines. Beverage machines, such as coffee machines, can vary in terms of how much a user is required to interact with the beverage machine during use.

In a manual espresso machine, the user fills a brewing vessel, which brewing vessel is included in a so-called portafilter, with coffee grounds. The user then tamps the coffee grounds within the brewing vessel with sufficient pressure to create a so-called puck of ground coffee. The brewing vessel containing the puck is mounted to the coffee machine, usually via a bayonet-type coupling. Next, the coffee machine drives hot water through the puck and the resulting coffee is dispensed via a spout that is typically integrated in the portafilter. After brewing, the user is required to disconnect the portafilter from the coffee machine, and empty the portafilter, throwing away the used coffee grounds.

There are also manual espresso machines with an integrated grinder. In such machines, the portafilter may be movable by the user between a first position where it receives ground coffee and a second position where coffee is brewed. Tamping may be done manually or via a manually operated lever.

In a fully automatic espresso machine, all of the above-mentioned steps are done automatically, in one and the same machine. The machine comprises a bean container and a grinder, to make the coffee grounds. These grounds are transported into a brewing vessel and tamped automatically, via a piston that may be hydraulically actuated or actuated via an electromotor. Next, hot water is driven through the coffee grounds in the brewing vessel, coffee is brewed and dispensed, and the used coffee grounds are discharged from the brewing vessel into a waste bin within the machine. By these steps being implemented automatically, the fully automatic espresso machine can save the user time. Moreover, consistent results are achievable due to the machine being capable of implementing the steps more repeatably than a user.

### SUMMARY OF THE INVENTION

The invention is defined by the claims.

According to examples in accordance with an aspect of the invention, there is provided a beverage machine comprising: a brewing vessel assembly comprising a brewing vessel; a granular material dispenser having a granular material outlet through which granular material is dispensable into the brewing vessel; and a liquid dispenser having a liquid outlet and a hydraulic system for delivering liquid into the brewing vessel via the liquid outlet, wherein the brewing vessel assembly and the granular material outlet are moveable relative to each other to enable adoption of a filling configuration in which the brewing vessel is arranged to receive the granular material via the granular material outlet, and wherein the brewing vessel assembly and the liquid outlet are moveable relative to each other to enable adoption of a brewing configuration in which the brewing vessel is arranged to receive the liquid via the liquid outlet, the hydraulic system comprising a hydraulic mechanism that is moveable via movement of liquid in the hydraulic system to cause the brewing vessel assembly and the granular material outlet to move away from each other during switching from the filling configuration to the brewing configuration.

Such a hydraulic mechanism can assist to alleviate burden on the user of the beverage machine, since she/he may have less, or even no, involvement in the switching from the filling configuration to the brewing configuration. Moreover, this functionality may be conveniently provided, e.g. with minimal additional components being required, due to the hydraulic mechanism being included in the liquid dispenser's hydraulic system, and thus being moved by movement of the liquid, e.g. water, in the hydraulic system.

In particular, the hydraulic mechanism may beneficially obviate the requirement for additional electrical components to implement switching from the filling configuration to the brewing configuration.

In some embodiments, the beverage machine comprises a locking mechanism that is lockable to secure the brewing vessel assembly relative to the granular material outlet in the filling configuration, and unlockable in response to the hydraulic mechanism being moved via said movement of the liquid in the hydraulic system to cause switching from the filling configuration to the brewing configuration.

The locking mechanism may mitigate the risk of relative movement away from the filling configuration while the granular material is being delivered into the brewing vessel.

In such embodiments, the locking mechanism may include an engagement member, such as a pin, for releasably engaging an engagement element included in the brewing vessel assembly.

The engagement member may, for example, be moveable by the hydraulic mechanism to release the engagement element, and thereby enable switching from the filling configuration to the brewing configuration.

In some embodiments, a resilient member, such as a spring, may be arranged to bias adoption of the brewing configuration in preference to the filling configuration. This may provide a relatively straightforwardly implementable way of enabling the brewing configuration to be adopted, since the hydraulic mechanism may not be solely relied upon to move the brewing vessel assembly and the liquid outlet relative to each other to adopt the brewing configuration.

In such embodiments, the resilient member, e.g. spring, may be arranged to force the brewing vessel assembly towards the liquid outlet when the locking mechanism is unlocked to release the brewing vessel assembly and the granular material outlet from each other.

In some embodiments, the hydraulic mechanism comprises a check valve assembly, with the check valve assembly comprising a housing, a piston member, and a biasing component, such as a spring.

In such embodiments, the piston member may be moveable in the housing by the liquid in the hydraulic system against a bias provided by the biasing component. This movement of the piston member may cause the brewing vessel assembly and the granular material outlet to move away from each other during switching from the filling configuration to the brewing configuration, for example by the movement of the piston member unlocking the locking mechanism.

The piston member may be displaced from its seat by a higher pressure of the liquid upstream of the piston member compared to a pressure downstream of the piston member. In other words, a pressure drop between upstream and downstream sides of the piston member may cause displacement of the piston member and thus downstream flow of the liquid.

In some embodiments, the hydraulic mechanism comprises a sealing element for forming a seal between the piston member and the housing, and a flow control element. A space for receiving the liquid may be defined between the piston member and the housing, with an upstream end of the space being defined by the sealing element and a downstream end of the space being defined by the flow control element.

In such embodiments, the flow control element may be configured to control flow of the liquid out of the space in a downstream direction away from the sealing element.

The downstream flow of the liquid permitted by the flow control element may enable the liquid flowing through the check valve assembly to fulfil further function(s) that is/are in addition to moving the piston member to cause the brewing vessel assembly and the granular material outlet to move away from each other during switching from the filling configuration to the brewing configuration.

For example, the further function(s) may include the check valve assembly providing, via the flow control element, a priming path of a pump included in the liquid dispensing assembly.

When, for instance, a liquid reservoir that holds the liquid to be pumped by the pump is empty, the pump can be filled with air. In this case, the priming path provided by the check valve assembly, and in particular by the flow control element thereof, may assist the pump to resume pumping of the liquid.

Alternatively or additionally, the inclusion of the flow control element may assist to increase the pressure drop compared to the scenario in which the sealing element is included in the check valve assembly but with the flow control element being omitted. In the latter case, liquid flow through the check valve assembly may only cause a relatively small displacement of the piston member, e.g. by a fraction of a millimeter, and a balance may arise between a spring force of the biasing component and the pressure drop between the upstream and downstream sides of the piston member. The increased pressure drop provided by inclusion of the flow control element may assist to increase the stroke of the piston member.

The flow control element may provide relatively small opening(s) between the piston member and the housing.

In some embodiments, the flow control element comprises a piston ring whose gap at least partly defines a liquid flow path out of the space in the downstream direction.

It is noted that the flow control element should not be regarded as being limited to including or being a piston ring, and in other embodiments, the flow control element comprises an O-ring or cup-seal that provides a controlled downstream leak of the liquid.

In some embodiments, the flow control element may be omitted, for example by the flow control element being replaced by a non-leaking O-ring. However, in such embodiments, the check valve assembly may not provide the above-described further function(s), e.g. the priming path for the pump.

Causing adoption of the brewing configuration can also be triggered in other ways, for example by the hydraulic mechanism comprising a membrane whose expansion, for example expansion comprising displacement of the membrane by about 2 mm, due to pressure exerted by liquid in the hydraulic system causes the locking mechanism to release the brewing vessel assembly.

In some embodiments, the liquid outlet's position is fixed (or stationary) and the brewing vessel assembly is moveable towards the liquid outlet to enable adoption of the brewing configuration.

The beverage machine may include a damper system configured to control deceleration of the brewing vessel assembly as the brewing vessel assembly approaches the liquid outlet during adoption of the brewing configuration. This may assist to minimize or prevent granular material in the brewing vessel from becoming unevenly distributed or being spilled from the brewing vessel during transit to adopt the brewing configuration.

In some embodiments, the beverage machine may comprise a guiding assembly configured to guide movement of the brewing vessel assembly and the liquid outlet relative to each other during adoption of the brewing configuration and/or to guide movement of the brewing vessel assembly and the granular material outlet relative to each other during adoption of the filling configuration.

The guiding assembly can be configured in any suitable manner. In some embodiments, the guiding assembly is configured to guide movement of the brewing vessel assembly relative to a fixed position of the liquid outlet during adoption of the brewing configuration.

In some embodiments, the brewing vessel assembly comprises a carrier for carrying the brewing vessel.

In such embodiments, the guiding assembly may include a carrier movement assembly for guiding the carrier, together with the brewing vessel, towards the liquid outlet and/or towards the granular material outlet.

In some embodiments, the movement guided by the guiding assembly comprises translational movement of the brewing vessel assembly between the granular material outlet and the liquid outlet.

The translational movement may, for example, comprise a linear translational movement and/or an arcuate translational movement.

In some embodiments, the brewing vessel assembly is manually moveable, for example, as well as being guided by the guiding assembly, by the user to adopt the filling configuration.

The beverage machine may, for example, be configured to enable the user to mount the empty brewing vessel in a mount position, and to manually move the thus mounted brewing vessel to the granular material outlet's fixed position in order to adopt the filling configuration. It is noted that mounting of the brewing vessel may entail, for example, receiving the brewing vessel in the carrier.

In some embodiments, the mount position corresponds to the filling configuration.

Hence when the user initially mounts the brewing vessel, the filling configuration may be consequently initially adopted.

In some embodiments, the mount position corresponds to the brewing configuration.

Hence when the user initially mounts the brewing vessel, the brewing configuration may be consequently initially adopted.

In other embodiments, the mount position may correspond to an intermediate configuration that is located between the brewing configuration and the filling configuration.

In some embodiments, the locking mechanism is lockable, to secure the brewing vessel assembly relative to the granular material outlet in the filling configuration, when the brewing vessel assembly is manually moved by the user to adopt the filling configuration.

In some embodiments, a controller is configured to control the hydraulic system to provide the movement of liquid in the hydraulic system that moves the hydraulic mechanism to enable adoption of the brewing configuration.

In some embodiments, the controller is configured to control the hydraulic system, based on an operation status of the granular material dispenser, to provide said movement of liquid in the hydraulic system that moves the hydraulic mechanism to enable adoption of the brewing configuration. This may assist to ensure that dispensing of the granular material is appropriately implemented prior to adoption of the brewing configuration.

In some embodiments, the granular material dispenser comprises a shutter movable between an open position that allows the granular material to be delivered via the granular material outlet and a closed position that blocks delivery of granular material via the granular material outlet.

The capability of the shutter to block the granular material outlet, e.g. chute opening, when adopting the closed position may assist to minimize or prevent unintentional egress of residual granular material from the granular material dispenser and concomitant pollution of surroundings by the granular material.

In some embodiments, a position determination element is arranged to be triggered by adoption of the filling configuration, and a shutter mover is arranged to cause movement of the shutter from the closed position to the open position in response to the position determination element being triggered by said adoption of the filling configuration.

Thus, the delivery of granular material via the granular material outlet may be implemented according to a defined, e.g. pre-set, spatial relationship between the granular material outlet and the brewing vessel assembly. This may assist in attaining the desired delivery of the granular material into the brewing vessel.

In some embodiments, the beverage machine is a coffee machine.

In some embodiments, the granular material dispenser comprises a grinding assembly for grinding material, e.g. coffee beans, to form the granular material, e.g. ground coffee.

In some embodiments, the beverage machine comprises an exterior mounting port. In such embodiments, the brewing vessel assembly (or a component thereof, such as the brewing vessel) may be removably fitted to said exterior mounting port. More specifically, the brewing vessel assembly (or component thereof) may be removably fitted to said exterior mounting port prior to a brew and removed therefrom after a brew for emptying.

In some embodiments, the brewing vessel assembly is or comprises a portafilter. The portafilter may be removably fitted, e.g. manually, to an exterior mounting port of the beverage machine.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIG. 1 shows part of a beverage machine according to an example;
FIG. 2 shows a hydraulic system of a beverage machine according to an example;
FIG. 3 provides a cross-sectional view of a hydraulic mechanism according to an example;
FIG. 4 provides an enlarged perspective interior view of part of the hydraulic mechanism shown in FIG. 3;
FIG. 5 provides a perspective view of a piston member included in the hydraulic mechanism shown in FIG. 3;
FIG. 6 provides a schematic cross-sectional view of part of a check valve assembly according to an example; and
FIG. 7 provides graphs of pressure drop vs. hydraulic diameter calculated using two different methods.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is a beverage machine, such as a coffee machine. The beverage machine includes a brewing vessel assembly that comprises a brewing vessel. The beverage machine also includes a granular material dispenser having a granular material outlet through which granular material is dispensable into the brewing vessel, and a liquid dispenser having a liquid outlet and a hydraulic system for delivering liquid into the brewing vessel via the liquid outlet. The brewing vessel assembly and the liquid outlet are moveable relative to each other to enable adoption of a brewing configuration in which the brewing vessel is arranged to receive the liquid via the liquid outlet. The hydraulic system comprises a hydraulic mechanism that is moveable via movement of liquid in the hydraulic system to cause the brewing vessel assembly and the granular material outlet to move away from each other during adoption of the brewing configuration.

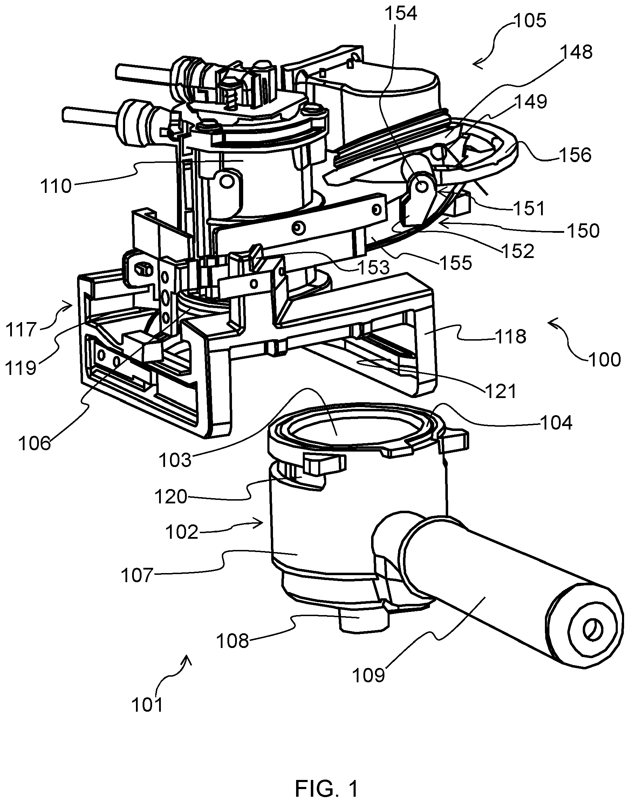

FIG. 1 shows part of a beverage machine 100 according to an example. The beverage machine 100 comprises a brewing vessel assembly 101. The brewing vessel assembly 101 itself comprises a brewing vessel 102 in which granular material and liquid are receivable to enable brewing of a beverage.

The brewing vessel 102 may have a cavity 103 for receiving the granular material and the liquid. The cavity 103 of the brewing vessel 102 may be delimited by a wall 104 of the brewing vessel 102 that extends around the cavity 103.

Regarding the granular material, particular mention is made of the granular material comprising, e.g. being, ground coffee, although in principle other types of granular material can be combined with the liquid, for example water, in order to brew the beverage.

It is generally noted that the term "granular material" as used herein may refer to a particulate material or powder.

The beverage machine 100 includes a granular material dispenser 105 having a granular material outlet through which the granular material, e.g. ground coffee, is dispensable into the brewing vessel 102.

The granular material dispenser 105 may comprise a chute through which the granular material is deliverable, e.g. at least partly by gravity.

Such a chute may terminate at a chute opening that, for example, defines the granular material outlet through which the granular material is deliverable into the brewing vessel 102.

In some embodiments, such as shown in FIG. 1, the beverage machine 100 includes a tamper head 106 dimensioned to fit into the brewing vessel 102 so that the granular material is compressible between the brewing vessel 102, in particular the wall 104 of the brewing vessel 102, and the tamper head 106.

Compressing, in other words tamping, of the granular material in this manner may provide a compressed mass of granular material through which the liquid, such as water, can be passed to prepare the beverage.

A denser mass of granular material, e.g. ground coffee, results from the tamping that provides more resistance to liquid flow therethrough than that provided by the granular material prior to tamping.

In at least some embodiments, such as shown in FIG. 1, the brewing vessel assembly 101 or more specifically the brewing vessel 102 includes a filter-supporting portion 107 for supporting a filter, for example a filter comprising a perforate base on which the granular material is supportable when received in the cavity 103.

Such a filter may retain the granular material, e.g. ground coffee, but allow the beverage, e.g. brewed coffee, to pass therethrough.

The brewing vessel assembly 101 or more specifically the brewing vessel 102 may also include the filter, e.g. perforate base, on which the granular material is supportable when received in the cavity 103.

In some embodiments, such as shown in FIG. 1, the brewing vessel assembly 101 comprises a spout 108 through which brewed coffee is deliverable, e.g. into a cup or pot placed beneath the spout 108. Such a spout 108 may be arranged downstream of the filter.

The brewing vessel 102 may be, or at least be included in, a portable component that is manipulable by a user separately from a remainder of the beverage machine 100. To this end, the brewing vessel 102 may have a handle 109 for assisting the user to manipulate the brewing vessel 102, for example to move the brewing vessel 102 towards and away from the remainder of the beverage machine 100.

It is noted that the brewing vessel 102 being a portable component and including the filter-supporting portion 107 may cause the brewing vessel 102 to be regarded as a so-called portafilter.

Whilst the brewing vessel 102, e.g. portafilter, is shown in FIG. 1 as being included in the beverage machine 100, owing to the possibility of the brewing vessel 102 being a portable component that is manipulable separately from other components of the beverage machine 100, it is also contemplated that the brewing vessel 102 is supplied to the user separately from the beverage machine 100, e.g. the remainder of the beverage machine 100.

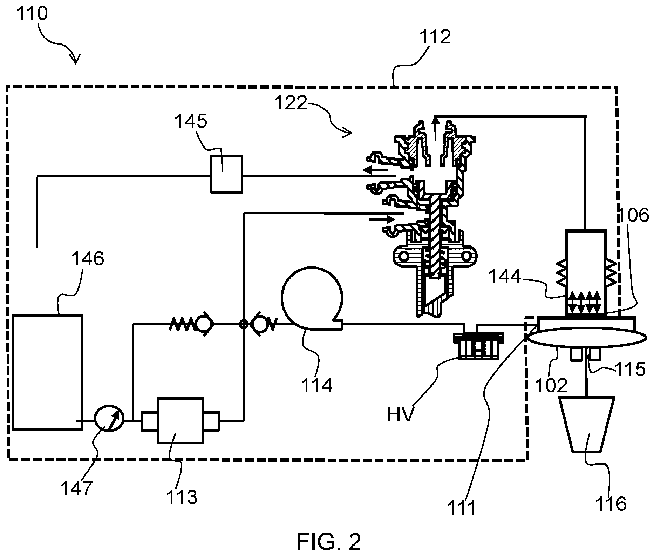

Referring to FIGs. 1 and 2, the beverage machine 100 comprises a liquid dispenser 110, for example a heated liquid dispenser 110. The liquid dispenser 110 has a liquid outlet 111 and a hydraulic system 112 for delivering liquid into the brewing vessel 102 via the liquid outlet 111. The hydraulic system 112 may, for example, force liquid through the brewing vessel's 102 cavity 103. To this end, the hydraulic system 112 may include a pump 113 for displacing the liquid towards and through the liquid outlet 111.

It is noted that the hydraulic system 112 may be regarded as a "hydraulic circuit", given that the hydraulic system 112 system may include an interconnected set of discrete components involved in the transportation of the liquid, e.g. water.

The liquid dispenser 110 may, for example, deliver liquid to the granular material, for instance tamped granular material, already received in the cavity 103 of the brewing vessel 102.

In at least some embodiments, and referring to FIG. 2, the liquid dispenser 110, or more specifically the hydraulic system 112 included in the liquid dispenser 110, comprises a heater 114 and a liquid flow path along which liquid is displaced through the heater 114 in order for the liquid to be heated and then delivered into the brewing vessel 102 via the liquid outlet 111.

In some embodiments, the liquid dispenser 110 is configured to dispense liquid into the brewing vessel 102 in response to a liquid pressure, e.g. water pressure, reaching or exceeding a threshold pressure, for example about 4 bar. Such a threshold pressure may, for example, be set according to the type of beverage, e.g. coffee, such as espresso, that is intended to be brewed in the brewing vessel 102.

In such embodiments, one or more valves HV included in the hydraulic system 112 may open in response to the threshold pressure being reached or exceeded.

In some embodiments, the liquid dispenser 110 and the brewing vessel assembly 101 are configured to enable a fluid pressure of at least 5 bar, preferably at least 6 bar, to be provided for forcing the liquid, e.g. heated water, through the cavity 103 containing the granular material.

In some embodiments, the liquid dispenser 110 and the brewing vessel assembly 101 are configured to enable a fluid pressure of 5 to 7.8 bar, preferably 6.0 to 7.8 bar, to be provided for forcing the liquid, e.g. heated water, through the cavity 103.

This pressure range may promote brewing performance, for example crema layer generation in the case of coffee brewing, whilst also restricting the pressure to safe levels that may not, for instance, trigger an overpressure valve included in the beverage machine 100.

Alternatively or additionally, the beverage machine 100 may comprise a pressure control system for enabling a controlled pressure to be exerted by a surface of the tamper head 106 on the granular material during tamping.

Movement of the tamper head 106 in order to implement the tamping may be achieved in any suitable manner, for example by movement of the tamper head 106 being hydraulically controlled, pneumatically controlled and/or motorized.

Thus, in some embodiments, the beverage machine 100 comprises one or more of a motorized system, a hydraulic system (as shown in FIGs. 1 and 2) and a pneumatic system for driving the surface of the tamper head 106 onto the granular material during tamping.

In some embodiments, such as shown in FIGs. 1 and 2, the tamper head 106 is included in the liquid dispenser 110. In such embodiments, the tamper head 106, as well as tamping the coffee, may close the cavity 103 of the brewing vessel 102 to define a brewing chamber to which the liquid is deliverable, e.g. via one or more openings, constituting the liquid outlet 111, defined in the tamper head 106.

Alternatively or additionally, the liquid dispenser's 110 hydraulic system 112 may be configured to control movement, e.g. lowering, of the tamper head 106 towards the granular material received in the brewing vessel 102.

It is noted, for the avoidance of any doubt, that lowering of the tamper head 106 into the brewing vessel 102 should not be regarded as being limiting, and in other embodiments the brewing vessel 102 may be lifted towards the tamper head 106, in which case the tamper head 106 may be stationary. Alternatively, the tamper head 106 and the brewing vessel 102 may both be moved towards each other.

In such embodiments, when the pressure inside the brewing chamber and in the hydraulic system 112 reaches or exceeds the threshold pressure, for example about 4 bar, the liquid, e.g. water, may be delivered into the brewing chamber. It is reiterated that such pressureresponsive heated water delivery may be implemented by, for example, opening of valve(s) HV in the hydraulic system 112.

In embodiments in which the liquid dispenser's 110 hydraulic system 112 is configured to control movement of the tamper head 106, the liquid, e.g. water, employed for this purpose may not be guided through the heater 114 that may be included in the liquid dispenser 110. This may be in contrast to the path defined for the liquid, e.g. water, used for brewing the beverage.

In some embodiments, such as schematically shown in FIG. 2, the brewing vessel assembly 101, comprises an outlet member that delimits an orifice 115 through which the beverage brewed in the brewing vessel 102, e.g. brewed in the cavity 103 of the brewing vessel 102, is deliverable.

Such an orifice 115 can assist to maintain elevated pressure in the brewing vessel 102/brewing chamber, and thus help to generate a crema layer when coffee is being brewed in the brewing vessel 102. Such an orifice 115 may further assist to ensure complete emptying of the brewing vessel 102 after brewing is complete and/or can assist to achieve a desired temperature of the brewed beverage received in the user's cup/pot 116.

In some embodiments, the orifice's 115 minimum cross-sectional area for determining flow rate through the orifice 115 is 0.03 to 0.5 mm², preferably 0.03 to 0.2 mm², such as about 0.09 mm². This range for the orifice's 115 minimum cross-sectional area may assist to promote brewing performance, for example crema layer generation, whilst also facilitating emptying of the brewing vessel 102 after brewing.

The orifice 115 may, for example, have a circular cross-section, e.g. a circular cross-section at all points along the flow path provided by the orifice 115.

In embodiments in which the orifice 115 has such a circular cross-section, the smallest diameter of the orifice 115 may be 0.2 to 0.5 mm, preferably about 0.34 mm.

In some embodiments, the orifice's 115 minimum cross-sectional area of 0.03 to 0.5 mm², preferably 0.03 to 0.2 mm², is provided in combination with a fluid pressure of 5 to 7.8 bar being provided for forcing the liquid, e.g. heated water, through the cavity 103 containing the granular material.

This combination may be particularly beneficial in terms of promoting brewing performance, for example crema layer generation, whilst also assisting to minimize the risk of the pressure compromising the structural integrity of the outlet member.

More generally, and referring again to FIG. 1, the brewing vessel assembly 101 and the granular material outlet of the granular material dispenser 105 are moveable relative to each other to enable adoption of a filling configuration in which the brewing vessel 102 is arranged to receive the granular material via the granular material outlet.

Moreover, the brewing vessel assembly 101 and the liquid outlet 111 of the liquid dispenser 110 are moveable relative to each other to enable adoption of a brewing configuration in which the brewing vessel 102 is arranged to receive the liquid via the liquid outlet 111.

The nature of the relative movement of the brewing vessel assembly 101 and the liquid outlet 111 in order to adopt the brewing configuration, and the nature of the relative movement of the brewing vessel assembly 101 and the granular material outlet in order to adopt the filling configuration are not particularly limited. In some embodiments, such as shown in FIG. 1, the brewing vessel assembly 101 is moveable, e.g. displaceable in a horizontal plane, towards the liquid outlet while the liquid outlet's 111 position remains fixed, to enable adoption of the brewing configuration.

Alternatively or additionally, the brewing vessel assembly 101 is moveable, e.g. displaceable in a horizontal plane, towards the granular material outlet while the granular material outlet's position remains fixed, to enable adoption of the filling configuration.

In some embodiments, at least part of the brewing vessel assembly 101 may rotate, e.g. about its central axis, during adoption of the brewing configuration and/or the filling configuration. Alternatively or additionally, the brewing vessel assembly 101 may be displaced upwardly or downwardly, e.g. while the respective outlet's elevation remains fixed, during adoption of the brewing configuration and/or the filling configuration.

In other embodiments, the brewing vessel assembly 101 may not itself be required to move in order for the brewing configuration or the filling configuration to be adopted. For example, the brewing vessel's 102 position may be fixed, e.g. by the brewing vessel assembly 101 being statically mountable in the beverage machine 100, with at least part of the liquid dispenser 110 and/or at least part of the granular material dispenser 105 being movable, e.g. pivotable, in order for the brewing configuration or the filling configuration to be adopted.

Such movement of the at least part of the granular material dispenser 105 can be implemented in any suitable manner. In some embodiments, a chute of the granular material dispenser 105 is pivotably mounted, with pivoting of the chute towards the brewing vessel 102 enabling adoption of the filling configuration.

In such embodiments, movement, e.g. pivoting, of the chute away from the filling configuration may be for the purpose of, for example, providing space for the tamper head 106 to approach the mounted brewing vessel 102 in order to implement tamping of the granular material received in the brewing vessel 102.

In some embodiments, and referring again to FIG. 1, the beverage machine 100 comprises a guiding assembly 117 configured to guide movement of the brewing vessel assembly 101 and the liquid outlet 111 relative to each other during adoption of the brewing configuration. Such a guiding assembly 117 may provide a convenient way of facilitating arrangement of the liquid outlet 111 and the brewing vessel assembly 101 in the brewing configuration.

The guiding assembly 117 can be configured in any suitable manner. In some embodiments, the guiding assembly 117 is configured to guide movement of the brewing vessel assembly 101 relative to a fixed position of the liquid outlet 111 during adoption of the brewing configuration.

Alternatively, the guiding assembly 117 may be configured to guide movement of at least the liquid outlet 111 of the liquid dispenser 110 relative to a fixed position of the brewing vessel assembly 101 during adoption of the brewing configuration.

The guiding assembly 117 may also be configured to guide movement of the brewing vessel assembly 101 and the granular material outlet relative to each other during adoption of the filling configuration. Thus, the guiding assembly 117 may be configured to guide movement of the brewing vessel assembly 101 relative to the granular material outlet and relative to the liquid outlet 111 to enable switching between the filling configuration and the brewing configuration.

In some embodiments, such as shown in FIG. 1, the brewing vessel assembly 101 comprises a carrier 118 for carrying the brewing vessel 102.

In such embodiments, the carrier 118 may be moveable together with the brewing vessel 102 during adoption of the brewing configuration and the filling configuration.

The guiding assembly 117 may include a carrier movement assembly for guiding the carrier 118, together with the brewing vessel 102, towards the liquid outlet 111, e.g. as well as towards the granular material outlet.

In such embodiments, the carrier movement assembly may include runner(s) and/or rail(s) 119 for enabling sliding movement of the carrier 118.

The brewing vessel 102 may be received in the carrier 118 in any suitable manner. In some embodiments, such as shown in FIG. 1, one or more grooves 120 may be defined in the brewing vessel 102, e.g. in an exterior surface of the brewing vessel 102, with the carrier 118 comprising protrusion(s) 121 that engage with the groove(s) 120 when the brewing vessel 102 is received in the carrier 118 in order to secure the brewing vessel 102 to the carrier 118.

It is noted that the groove(s) 120 and the protrusion(s) 121 can be included in a bayonet-type coupling between the brewing vessel 102 and the carrier 118. Numerous alternative ways of receiving and securing the brewing vessel 102 in the carrier 118 can be contemplated, such as protrusion(s) protruding from the external surface of the brewing vessel 102, with such protrusion(s) being receivable in groove(s) defined in the carrier 118, and so on.

In alternative embodiments, the carrier 118 is omitted. For example, the brewing vessel 102 may itself be slidable along runner(s) and/or rail(s) 119 included in the guiding assembly 117.

More generally, any form of movement may be guided by the guiding assembly 117 provided that the brewing vessel assembly 101 and/or the liquid outlet 111, e.g. as well as the granular material outlet, can be guided so as to adopt the brewing configuration, e.g. as well as the filling configuration. In some embodiments, such as shown in FIG. 1, the movement guided by the guiding assembly 117 comprises translational movement of the brewing vessel assembly 101 between the granular material outlet and the liquid outlet 111. Such a translational movement may comprise a linear translational movement and/or an arcuate translational movement.

In a non-limiting example, the guiding assembly 117 comprises curved rails 119 that form a circle segment in a horizontal plane, with the center point of the curvature of the rails 119 lying distal with respect to a circumference of the wall 104 of the brewing vessel 102. In such an example, a lateral movement with a (slight) rotation of the carrier 118 between a brew position corresponding to the brewing configuration and a fill position corresponding to the filling configuration may be evident to the user standing in front of the guiding assembly 117.

In some embodiments, such as shown in FIG. 1, the brewing vessel assembly 101 is manually moveable by the user to adopt the filling configuration.

In some embodiments, the beverage machine 100 is configured to enable the user to mount the empty brewing vessel 102 in a mount position, and to manually move the thus mounted brewing vessel 102 to the granular material outlet's fixed position in order to adopt the filling configuration.

It is noted that mounting of the brewing vessel 102 may entail, for example, receiving the brewing vessel 102 in the carrier 118. Alternatively or additionally, the user's manual moving of the mounted brewing vessel 102 to the granular material outlet's fixed position may be guided by the guiding assembly 117.

In some embodiments, the mount position corresponds to the brewing configuration. Hence when the user initially mounts the brewing vessel 102, the brewing configuration may be consequently initially adopted. An example of this is shown in FIG. 1.

In other embodiments, the mount position may correspond to an intermediate configuration that is located between the brewing configuration and the filling configuration.

As an alternative or in addition to the brewing vessel assembly 101 being manually moveable by the user to adopt the filling configuration, the beverage machine 100 may include a movement mechanism, e.g. an electric and/or hydraulic movement mechanism, for driving movement of the brewing vessel assembly 101 and/or the granular material outlet towards each other to adopt the filling configuration.

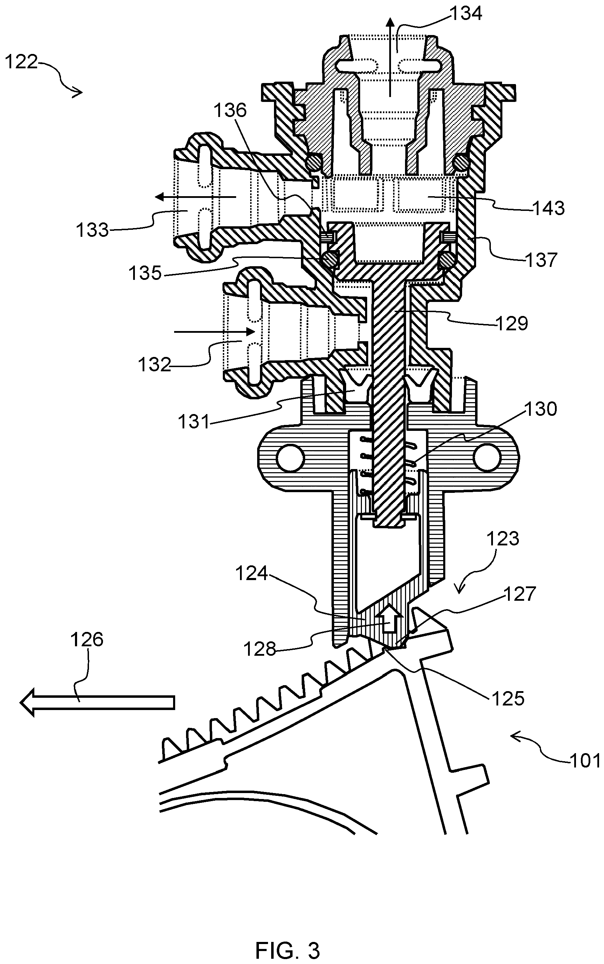

More generally, and referring now to FIGs. 2 and 3, the hydraulic system 112 comprises a hydraulic mechanism 122 that is moveable via movement of liquid in the hydraulic system 112 to cause the brewing vessel assembly 101 and the granular material outlet to move away from each other during switching from the filling configuration to the brewing configuration.

Such a hydraulic mechanism 122 can assist to alleviate burden on the user of the beverage machine 100, since she/he may have less, or even no, involvement in the switching from the filling configuration to the brewing configuration. Moreover, this functionality may be conveniently provided, e.g. with minimal additional components being required, due to the hydraulic mechanism 122 being included in the liquid dispenser's 110 hydraulic system 112, and thus being moved by movement of the liquid, e.g. water, in the hydraulic system 112.

In particular, the hydraulic mechanism 122 may beneficially obviate the requirement for additional electrical components to implement switching from the filling configuration to the brewing configuration.

In some embodiments, and referring to FIG. 3, the beverage machine 100 comprises a locking mechanism 123 that is lockable to secure the brewing vessel assembly 101 relative to the granular material outlet in the filling configuration, and unlockable in response to the hydraulic mechanism 122 being moved via said movement of the liquid in the hydraulic system 112. The locking mechanism 123 may mitigate the risk of relative movement away from the filling configuration while the granular material is being delivered into the brewing vessel 102.

In such embodiments, the locking mechanism 123 may include an engagement member 124, such as a pin, for releasably engaging an engagement element 125 included in the brewing vessel assembly 101. The engagement member 124 may be moveable by the hydraulic mechanism 122 to release the engagement element 125, and thereby enable switching from the filling configuration to the brewing configuration.

It is noted that the engagement element 125 may be included in the brewing vessel 102 and/or in the carrier 118 (when the carrier 118 is included in the brewing vessel assembly 101).

In some embodiments, a resilient member, such as a spring, may be arranged to bias adoption of the brewing configuration in preference to the filling configuration.

In such embodiments, the resilient member, e.g. spring, may be arranged to force the brewing vessel assembly 101 towards the liquid outlet 111 (in the direction indicated by the arrow 126 in FIG. 3) when the locking mechanism 123 is unlocked to release the brewing vessel assembly 101 and the granular material outlet from each other.

In some embodiments, and still referring to FIG. 3, a free end 127 of the engagement member 124 may engage with the engagement element 125, e.g. a tooth or teeth provided in the brewing vessel assembly 101, so as to retain adoption of the filling configuration, and block movement of the brewing vessel assembly 101 towards the liquid outlet 111.

The free end 127 of the engagement member 124 may engage with the engagement element 125 when the filling configuration is adopted, e.g. by the user manually moving the brewing vessel assembly 101 so that the filling configuration is adopted.

In such embodiments, when the engagement member 124 is moved (in the direction indicated by the arrow 128 in FIG. 3) by the hydraulic mechanism 122 to release the engagement element 125, the resilient member may force the brewing vessel assembly 101 towards the liquid outlet 111 (in the direction indicated by the arrow 126 in FIG. 3).

In some embodiments, the beverage machine 100 comprises a damper system configured to control deceleration of the brewing vessel assembly 101 as the brewing vessel assembly 101 approaches the liquid outlet 111 during adoption of the brewing configuration. This may assist to minimize or prevent granular material in the brewing vessel 102 from becoming unevenly distributed or being spilled from the brewing vessel 102 during transit to adopt the brewing configuration.

The hydraulic mechanism 122 can be implemented in any suitable manner. In at least some embodiments, and as best shown in FIG. 3, the hydraulic mechanism 122 comprises a piston member 129 that is moveable by the liquid, e.g. water, in the hydraulic system 112.

The piston member 129 may be included, together with a biasing component 130, e.g. a spring, in a check valve assembly. The piston member 129 may be moveable by the liquid in the hydraulic system 112 against a bias provided by the biasing component 130.

The piston member 129 may be displaced from its seat by a higher pressure of the liquid upstream of the piston member 129 compared to a pressure downstream of the piston member 129. In other words, a pressure drop between upstream and downstream sides of the piston member 129 may cause displacement of the piston member 129 and thus downstream flow of the liquid.

An upstream portion of the check valve assembly may be sealed with a seal member 131, such as a lip seal, to ensure that the liquid follows a single path for driving movement of the piston member 129.

In this way, liquid entering an inlet 132 of the check valve assembly may move the piston member 129, e.g. central structure, of the check valve assembly in the downstream direction, thereby opening a downstream path for the liquid towards at least one outlet 133, 134 of the check valve assembly.

The piston member 129 may include a sealing element 135 for forming a seal between the piston member 129 and a housing 137 of the check valve assembly in which the piston member 129 is moveable.

In some embodiments, such as shown in FIGs. 3 to 5, the sealing element 135 forms a seal between the piston member 129 and an upstream, narrower portion of an interior of the housing 137, and a flow control element 136 provides a controlled liquid flow path between the piston member 129 and a downstream, wider portion of the interior of the housing 137, with a space for receiving the liquid being defined between the piston member 129 and the housing 137. An upstream end of this space is provided by the sealing element 135, with a downstream end of the space being provided by the flow control element 136.

The inclusion of the flow control element 136 may assist to increase the pressure drop compared to the scenario in which the sealing element 135 is included in the check valve assembly but with the flow control element 136 being omitted. In the latter case, liquid flow through the check valve assembly may only cause a relatively small displacement of the piston member 129, e.g. by a fraction of a millimeter, and a balance may arise between a spring force of the biasing component 130 and the pressure drop between the upstream and downstream sides of the piston member 129.

The flow control element 136 may provide relatively small opening(s) between the piston member 129 and the housing 137, which opening(s) make the pressure drop greater compared to when the sealing element 135 is included in the check valve assembly but with the flow control element 136 being omitted.

The increased pressure drop provided by inclusion of the flow control element 136 may assist to increase the stroke 138 of the piston member 129.

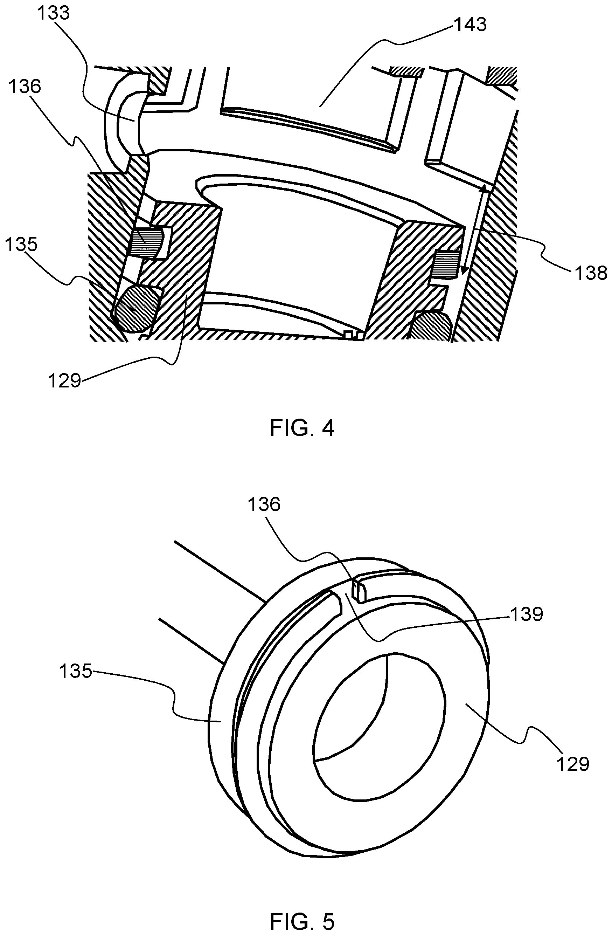

In some embodiments, and referring to FIG. 4, a stroke 138 of the piston member 129 is 2 to 3 mm.

The first sealing element 135 may, for example, be an O-ring, such as an O-ring formed from an elastomeric material.

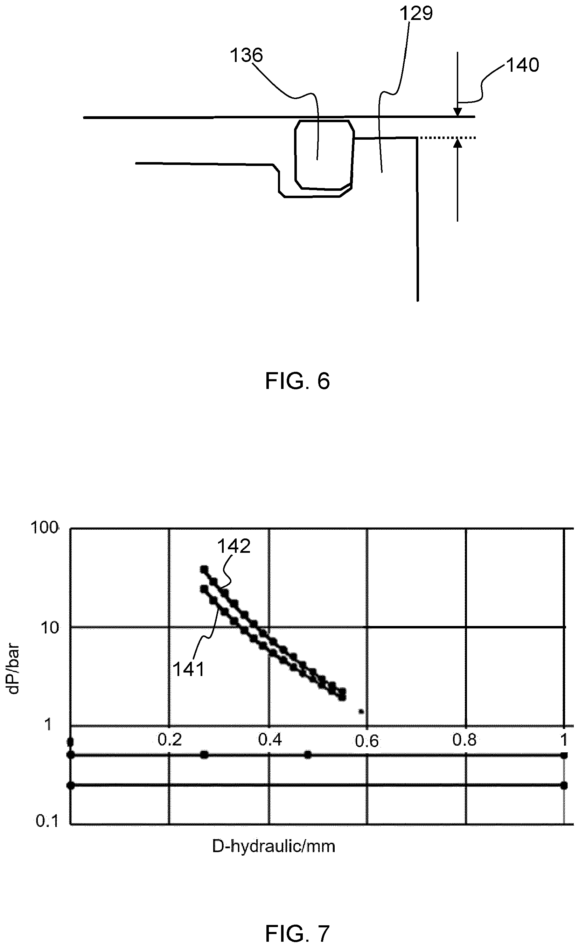

Alternatively or additionally, and referring to FIGs. 5 and 6, the flow control element 136 may be a piston ring. Such a piston ring may, for example, have a well-defined gap 139 for defining the opening between the piston member 129 and the housing 137.

The gap 139 may assist the piston ring to accommodate tolerances.

The gap 139 may have a width of, for example, 0.5 to 2.2 mm. Alternatively or additionally, a groove height 140 may be 0.1 to 0.3 mm.

In a specific non-limiting example, the width of the gap 139 is 1.32 ± 0.115 mm; and the groove height is 0.155 ± 0.81 mm.

To verify proper functioning of the check valve assembly, calculations were performed to estimate the pressure drop created over the whole piston member 129, in other words the whole central moving part of the check valve assembly. This may, in this non-limiting example, be the pressure drop over the flow restriction provided by the flow control element 136, e.g. piston ring. The nominal and maximal size of the opening through which the liquid can flow was estimated by taking into account tolerances of relevant components of the check valve assembly, and in this particular case the piston member 129, the flow control element 136 in the form of a piston ring, and the housing 137.

The opening was approximated as having a rectangular cross-sectional shape, and converted to a hydraulic diameter over which the pressure drop was calculated for a flow of 3 mL/s. FIG. 7 shows graphs 141, 142 of pressure drop vs. the hydraulic diameter calculated using two common methods (Idelchik 141 and Bernoulli 142), which provided very similar values. These results indicated the requisite pressure drops could be achieved using opening(s) whose dimensions are straightforwardly attainable, e.g. via a flow control element 136 in the form of a piston ring.

It is noted that a flow of about 3 mL/s may be employed when switching from the filling configuration to the brewing configuration, e.g. when the hydraulic mechanism 122 is being operated to unlock the locking mechanism 123 to release the brewing vessel assembly 101 and the granular material outlet from each other.

It will be appreciated that when the pressure drop is higher than an opening pressure of the check valve assembly, the release of the brewing vessel assembly 101 and the granular material outlet from each other may be ensured.

It is noted that the check valve assembly may be designed with a relatively large surface area, which may create a relatively large force, even with a modest pressure drop over the check valve assembly.

It is also noted that the flow control element 136 should not be regarded as being limited to including or being a piston ring, and in other embodiments, the flow control element 136 is an O-ring or cup-seal that provides a controlled downstream leak of the liquid.

Causing adoption of the brewing configuration can also be triggered in other ways, for example by the hydraulic mechanism 122 comprising a membrane whose expansion, for example expansion comprising displacement of the membrane by about 2 mm, due to pressure exerted by liquid in the hydraulic system 112 causes the locking mechanism 123 to release the brewing vessel assembly 101.

The housing 137 may be configured so that a wider bore delimited by the housing 137 is provided at the end of the piston member's 129 stroke 138, e.g. at the end of the piston member's 129 stroke 138 of 2 to 3 mm.

This may assist to ensure that the full stroke of the piston member 129 is achieved. Once the piston member 129 has been displaced to reach the wider bore, the liquid may be permitted to flow around the piston member 129.

In some embodiments, and as shown in FIGs. 3 and 4, the housing 137 includes a castellation structure 143 where the wider bore is provided.

The castellation structure 143 provides flow channels for the liquid between castellations but with the castellations maintaining contact with the piston member 129, e.g. the flow control element 136/piston ring thereof.

Thus, the castellation structure 143 may assist to minimize the risk that the piston member 129, e.g. the flow control element 136/piston ring thereof, expanding. In this way, the castellation structure 143 can help to ensure that the piston member 129 is ultimately able to return to its seat, e.g. by action of the biasing component 130.

In some embodiments, and as best shown in FIGs. 2 and 3, the check valve assembly's at least one outlet 133, 134 comprises an outlet 134 from which the liquid is delivered to the tamper head 106, for example to a hydraulic piston 144 that drives movement of the tamper head 106 for tamping the granular material received in the brewing vessel 102.

Alternatively or additionally, the at least one outlet 133, 134 may comprise a (further) outlet 133 from which the liquid is delivered to an electronic valve 145, which electronic valve 145 may control transport of the liquid back to a liquid reservoir 146, e.g. a water tank.

The electronic valve 145 may be opened to allow transport of the liquid back to the liquid reservoir 146 when the check valve assembly is causing the brewing vessel assembly 101 and the granular material outlet to move away from each other during switching from the filling configuration to the brewing configuration.

This makes flow possible without activating the hydraulic piston 144 that drives movement of the tamper head 106.

The check valve assembly design described herein may, e.g. only with a few milliliters of water, cause switching from the filling configuration to the brewing configuration with little or no pressure build-up being allowed. The latter may, for example, assist to avoid the hydraulic piston 144 being moved too early.

It is noted that even without the check valve assembly's function of causing the brewing vessel assembly 101 and the granular material outlet to move away from each other during switching from the filling configuration to the brewing configuration, the two outlets 133, 134 of the check valve assembly may be provided to enable emptying of the hydraulic piston 144 when brewing is complete.

It is further noted that in some embodiments, such as shown in FIG. 2, the check valve assembly provides a priming path for the pump 113.

When the liquid reservoir 146 is empty, the pump 113 can be filled with air. In this case, the check valve assembly may provide a priming path, in other words a low pressure path, when the electronic valve 145 is opened.

Such a low pressure path may assist the pump 113 to resume pumping of the liquid, e.g. water. When the electronic valve 145 is opened the first resistance to flow may be provided by the check valve assembly. The check valve assembly may be configured to have an opening pressure that is as low as possible.

An opening pressure of the check valve assembly may be less than 0.5 bar, preferably less than 0.3 bar.

Such a relatively low opening pressure may assist the check valve assembly to provide the priming path during priming of the pump 113.

Alternatively or additionally, an opening pressure of the check valve assembly may be at least 0.2 bar, preferably at least 0.25 bar. In a non-limiting example, the opening pressure of the check valve assembly is about 0.25 bar.

Opening pressures lower than 0.2 bar, e.g. as at least partly determined by the strength of a spring defining the biasing component 130, may mean that the check valve assembly does not close sufficiently quickly. It is also noted that friction may be provided by the first sealing element 135 and the flow control element 136, e.g. piston ring.

The piston ring may represent a favorable choice of flow control element 136 in respect of priming of the pump 113, due to there being relatively low friction between the piston ring and the housing 137.

In some embodiments, the beverage machine 100 comprises a controller configured to control the hydraulic system 112 to provide said movement of liquid in the hydraulic system 112 that moves the hydraulic mechanism 122.

The controller may, for example, control the pump 113 and the electronic valve 145 included in the hydraulic system 112.

Alternatively or additionally, the controller may be configured to control the hydraulic system 112, based on an operation status of the granular material dispenser 105, to provide said movement of liquid in the hydraulic system 112 that moves the hydraulic mechanism 122.

In some embodiments, the granular material dispenser 105 comprises a grinding assembly for grinding material to form the granular material.

The grinding assembly may thus provide the granular material that is deliverable via the granular material outlet. In such embodiments, the granular material outlet may be arranged beneath the grinding assembly to enable the granular material provided by the grinding assembly to be dispensed into the brewing vessel 102 at least partly by gravity.

In such embodiments, the operation status of the granular material dispenser 105 may comprise a grinding operation status of the grinding assembly. For example, the controller may be configured to control the hydraulic system in response to completion of a grinding operation of the grinding assembly to provide said movement of liquid in the hydraulic system 112 that moves the hydraulic mechanism 122.

The controller may be configured to operate/activate the grinding assembly for a fixed amount of time, e.g. 8 to 10 seconds. Such a fixed amount of time may be empirically determined. Alternatively or additionally, the beverage machine 100 may include an additional sensor, for example an optical sensor, e.g. light gate-type sensor, for providing feedback on grinding. In such embodiments, the controller may adjust the amount of time during which the grinding assembly is activated based on the feedback.

In this way, variations associated with the grinding assembly and/or the material, e.g. coffee beans, that can cause inaccurate dosing may be accounted for.

In some embodiments, the beverage machine 100 includes a sensing system arranged to detect adoption or approaching adoption of the filling configuration, with the controller being configured to activate the grinding assembly to grind the material, e.g. coffee beans, based on the sensor detecting this adoption or approaching adoption of the filling configuration.

In such embodiments, the brewing vessel 102 or the carrier 118 may include a magnet, with the sensing system comprising a Hall sensor for detecting approach of the brewing vessel 102 and/or the carrier 118 towards the fill position via detection of the magnet's magnetic field.

In some embodiments, the controller may be triggered by a signal from the sensing system, e.g. Hall sensor, to activate the grinding assembly to grind the material, e.g. coffee beans, but with a delay for allowing the brewing vessel 102 and/or the carrier 118 to reach the fill position. For example, a 0.5 to 1 second delay may be implemented by the controller.

When the brewing configuration is adopted, this may be detected by a further sensing system, e.g. a (further) Hall sensor. The signal from the further sensing system that indicates adoption of the brewing configuration may be used by the controller as a basis on which to operate, e.g. continue operation of, the pump 113.

In some embodiments, and referring to FIG. 2, the controller controls the pump time during which liquid is delivered to the brewing vessel 102 based on information received from a flow meter 147.

When the desired volume of liquid, e.g. as indicated using the information received from the flow meter 147, has been pumped to the brewing chamber, the pump 113 may be stopped.

The controller may be configured to control the electronic valve 145 to allow liquid used to move the tamper head 106 to flow back to the liquid reservoir 146. In this way, pressure exerted by the tamper head 106 on the granular material in the brewing vessel 102 can be released, as previously described.

In such embodiments, retraction of the tamper head 106 may be assisted by recovery of a resilient element, e.g. spring, that is pretensioned by the initial movement of the tamper head 106 that causes tamping of the granular material received in the brewing vessel 102.

The controller may be configured to implement a time delay, e.g. of about 10 seconds, between stopping liquid delivery to the brewing chamber and controlling the electronic valve 145 to allow liquid used to move the tamper head 106 to flow back to the liquid reservoir 146. As well as allowing time for pressure in the brewing chamber to decrease, this time delay may permit water to be released/pressed from the puck of granular material. It is noted that the above-mentioned 10 seconds time delay has been empirically determined.

The brewing vessel 102 may then be emptied in order to start a new brew cycle. For example, the brewing vessel 102, e.g. portafilter, may first be removed from an exterior mounting port of the beverage machine 100 and the used granular material emptied therefrom.

In some embodiments, and referring again to FIG. 1, the granular material dispenser 105 comprises a shutter 148 movable between an open position that allows the granular material to be delivered via the granular material outlet and a closed position that blocks delivery of granular material via the granular material outlet.

The capability of the shutter 148 to block the granular material outlet, e.g. chute opening, when adopting the closed position may assist to minimize or prevent unintentional egress of residual granular material from the granular material dispenser 105 and concomitant pollution of surroundings by the granular material.

Any residual granular material collected on the shutter 148 when the shutter 148 is in the closed position may be delivered into the brewing vessel 102 when the shutter 148 subsequently adopts the open position.

It is noted that the shutter 148 may further assist to restrict ingress of steam into the granular material dispenser 105, e.g. towards the above-described grinding assembly. By limiting passage of moisture into the granular material dispenser 105 in this manner, reliability of granular material delivery may be enhanced.

To this end, the granular material dispenser 105 may include a sealing member, e.g. a gasket made from an elastomeric material, e.g. silicone rubber, arranged to provide a seal between the shutter 148 and a chute of the granular material dispenser 105 when the shutter 148 is in the closed position.

In at least some embodiments, and still referring to FIG. 1, the granular material dispenser 105 comprises a biasing element 149 arranged to bias the shutter 148 into the closed position.

Thus, the default position adopted by the shutter 148 may be the closed position. In this way, unintentional egress of residual granular material from the granular material dispenser 105 and, for example, steam ingress into the granular material dispenser 105 may be minimized or prevented when the granular material dispenser 105 is not being employed to dispense granular material into the brewing vessel 102.

Any suitable type of biasing element 149 can be contemplated for biasing the shutter 148 into the closed position. In some embodiments, such as shown in FIG. 1, the biasing element 149 comprises, e.g. is in the form of, a spring.

The spring used as the biasing element 149 can be of any suitable type. In some embodiments, the spring is a torsion spring. Such a torsion spring may be particularly suitable in embodiments, such as shown in FIG. 1, in which the shutter 148 is pivotable between the open position and the closed position.

In some embodiments, a position determination element 150 may be arranged to be triggered by adoption of the filling configuration, with a shutter mover 151 being arranged to cause movement of the shutter 148 from the closed position to the open position in response to the position determination element 150 being triggered by said adoption of the filling configuration.

Thus, the delivery of granular material via the granular material outlet may be implemented according to a defined, e.g. pre-set, spatial relationship between the granular material outlet and the brewing vessel assembly 101.

This may assist in attaining the desired delivery of the granular material into the brewing vessel 102, and thus the desired distribution of the granular material in the brewing vessel 102.

Moreover, pollution of surroundings of the granular material dispenser 105 by granular material may be alleviated due to the movement of the shutter 148 from the closed position to the open position being contingent on adoption of the filling configuration.

In some embodiments, the filling configuration comprises alignment of the wall 104 that extends around the cavity 103 with a (further) wall of the granular material dispenser 105 that delimits the granular material outlet so that the wall 104 and the further wall guide the granular material into the cavity 103.

This alignment between the wall 104 and the further wall may assist to minimize or prevent pollution of the beverage machine 100 and/or an area surrounding the beverage machine 100 by granular material.

The shutter 148 may be fully open when the filling configuration (or "grinding configuration" in embodiments in which the grinding assembly is included in the granular material dispenser 105) is adopted, and fully closed as soon as the brewing vessel assembly 101 and/or the granular material outlet is/are out of, in other words displaced from, the filling configuration.

In some embodiments, the brewing configuration comprises alignment of a central heated water delivery axis of the liquid dispenser 110 that extends through a center of the liquid outlet 111 or tamper head 106 and a central axis of the brewing vessel 102 which passes through a center of the cavity 103.

In the brewing configuration, or in any other arrangement in which the brewing vessel 102 is spatially removed from the granular material outlet, the shutter 148 may remain closed, for example due to the biasing element 149 biasing the shutter 148 into the closed position.

Turning to the position determination element 150 and the shutter mover 151, these components can have any suitable design provided that the position determination element 150 is triggerable by, in other words in response to, the granular material outlet and the brewing vessel assembly 101 adopting the filling configuration, and the shutter mover 151 is capable of moving the shutter 148 from the closed position to the open position in response to the position determination element 150 being triggered.

In some embodiments, the position determination element 150 comprises a sensor for sensing adoption of the filling configuration, with a controller being adapted to control the shutter mover 151, e.g. an electromechanical shutter actuator, to move the shutter 148 from the closed position to the open position based on data from the sensor being indicative of adoption of the filling configuration.

In such embodiments, any suitable sensor may be employed for the position determination element 150. For example, an optical sensor arranged to optically sense adoption of the filling configuration, e.g. by a light beam being interrupted by the brewing vessel assembly 101 and/or the granular material outlet reaching a position corresponding to the filling configuration.

In other embodiments, such as shown in FIG. 1, the position determination element 150 and the shutter mover 151 are arranged to mechanically determine adoption of the filling configuration and move the shutter 148 from the closed position to the open position. Such a mechanically-implemented position determination and shutter 148 actuation may be more cost-effective to implement than, for example, the above-described solution utilizing a sensor- and controller-comprising position determination element 150, and an electromechanical shutter actuator.

In some embodiments, such as shown in FIG. 1, the position determination element 150 comprises a lever member 152. In such embodiments, the shutter mover 151 may be arranged to cause movement of the shutter 148 from the closed position to the open position in response to movement of the lever member 152 caused by adoption of the filling configuration. This may provide a relatively simple and cost-effective way of implementing the position determination element 150 and the shutter mover 151.

In some embodiments, a contact portion 153 may be included in the carrier 118 and arranged to bear against the lever member 152 when the carrier 118 carrying the brewing vessel 102 reaches a position in which the granular material outlet and the brewing vessel assembly 101 adopt the filling configuration.

In alternative embodiments, the contact portion 153 may be included in the brewing vessel 102 itself. In such embodiments, the vessel-comprising contact portion may bear against the lever member's 152 activation point when the brewing vessel 102 is positioned so that the granular material outlet and the brewing vessel assembly 101 are in the filling configuration.

In some embodiments, the shutter mover 151 comprises a pivot 154 arranged to enable pivoting of the shutter 148 to open and close the granular material outlet. This may provide a relatively straightforward and reliable way of moving the shutter 148.

As previously noted, a biasing element 149, e.g. a spring, may be arranged to bias the shutter 148 into the closed position. In such embodiments, the position determination element 150 and the shutter mover 151 may be arranged to enable the bias to be overcome when the granular material outlet and the brewing vessel assembly 101 adopt the filling configuration.

In some embodiments, such as shown in FIG. 1, the biasing element 149, e.g. spring, is arranged to bias rotation of the shutter 148 about the pivot 154 into the closed position. In such embodiments, the biasing of the shutter 148 into the closed position may be overcome by movement of the lever member 152, e.g. when the contact portion 153 bears against the lever member 152. Such movement of the lever member 152 may cause pivoting of the shutter 148 about the pivot 154, against the bias provided by the biasing element 149, thereby to expose the granular material outlet.

When the shutter 148 is in the open position, the granular material is deliverable into the brewing vessel 102 as previously described. In some embodiments, the granular material dispenser 105 includes a lower chute element 155 arranged between an upper chute element of the granular material dispenser 105 and the brewing vessel 102 when the filling configuration is adopted.

The lower chute element 155 may assist to guide the granular material into the brewing vessel 102.

As an alternative or in addition to the lower chute element 155, the granular material dispenser 105 may include pollution shielding 156 arranged around the chute proximal to the granular material outlet.

The pollution shielding 156 may act as a physical barrier to granular material, to prevent any granular material that has escaped from the granular material outlet but not received in the brewing vessel 102 from being transported too far away from the granular material dispenser 105.

In some embodiments, the user is required to perform two activities in order to prepare a beverage using the beverage machine 100. In such embodiments, the first activity may be to mount the brewing vessel assembly 101 (or brewing vessel 102) in an exterior mounting port of the beverage machine and to manually move the brewing vessel assembly 101 (or brewing vessel 102) to adopt the filling configuration. The second activity may be selection of a recipe via a user interface, such as one or more buttons, and/or a touchscreen, etc., included in the beverage machine 100.

During the first activity, the brewing vessel assembly 101, e.g. portafiltercomprising brewing vessel assembly 101, may be locked into position via the locking mechanism 123.

Following completion of these two activities, the processes of dispensing, e.g. comprising grinding, of the granular material and brewing may be executed without user involvement. First the granular material dispensing, e.g. grinding, takes place in the filling configuration, followed by releasing of the brewing vessel assembly 101 and the granular material outlet from each other to adopt the brewing configuration, as previously described.

To start a new brew cycle, the filling configuration may be required to be readopted, for example by manually moving, e.g. swiping, the brewing vessel assembly 101 back to the granular material outlet.

In some embodiments, a blocking mechanism is arranged to block such re-adoption of the filling configuration immediately following completion of brewing in the brewing configuration, but to allow such re-adoption of the filling configuration subject to removal of the brewing vessel assembly 101 (or brewing vessel 102, e.g. portafilter) and remounting of the brewing vessel assembly 101 (or brewing vessel 102) in the beverage machine 100.

In this way, the user may be prompted to empty used granular material, e.g. coffee grounds, from the brewing vessel 102 before starting a new brew cycle.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A beverage machine (100) comprising:
a brewing vessel assembly (101) comprising a brewing vessel (102);
a granular material dispenser (105) having a granular material outlet through which granular material is dispensable into the brewing vessel; and
a liquid dispenser (110) having a liquid outlet (111) and a hydraulic system (112) for delivering liquid into the brewing vessel via the liquid outlet, wherein the brewing vessel assembly and the granular material outlet are moveable relative to each other to enable adoption of a filling configuration in which the brewing vessel is arranged to receive the granular material via the granular material outlet, and wherein the brewing vessel assembly and the liquid outlet are moveable relative to each other to enable adoption of a brewing configuration in which the brewing vessel is arranged to receive the liquid via the liquid outlet, the hydraulic system comprising a hydraulic mechanism (122) that is moveable via movement of liquid in the hydraulic system to cause the brewing vessel assembly and the granular material outlet to move away from each other during switching from the filling configuration to the brewing configuration.

2. The beverage machine (100) according to claim 1, comprising a locking mechanism (123) that is lockable to secure the brewing vessel assembly (101) relative to the granular material outlet in the filling configuration, and unlockable in response to the hydraulic mechanism (122) being moved via said movement of the liquid in the hydraulic system (112).

3. The beverage machine (100) according to claim 1 or claim 2, comprising a resilient member arranged to bias adoption of the brewing configuration in preference to the filling configuration.

4. The beverage machine (100) according to claim 3 as according to claim 2, wherein the resilient member is arranged to force the brewing vessel assembly (101) towards the liquid outlet (111) when the locking mechanism is unlocked to release the brewing vessel assembly and the granular material outlet from each other.

5. The beverage machine (100) according to any one of claims 1 to 4, wherein the hydraulic mechanism (122) comprises a check valve assembly, the check valve assembly comprising a housing (137), a piston member (129), and a biasing component (130), the piston member being moveable in the housing by the liquid in the hydraulic system (112) against a bias provided by the biasing component.

6. The beverage machine (100) according to claim 5, wherein the hydraulic mechanism (122) comprises:
a sealing element (135) for forming a seal between the piston member and the housing (137); and
a flow control element (136), a space for receiving the liquid being defined between the piston member and the housing, an upstream end of the space being defined by the sealing element and a downstream end of the space being defined by the flow control element, the flow control element being configured to control flow of the liquid out of the space in a downstream direction away from the sealing element; optionally wherein the flow control element is in the form of a piston ring whose gap at least partly defines a liquid flow path out of the space in the downstream direction.

7. The beverage machine (100) according to any one of claims 1 to 6, wherein the liquid outlet's (111) position is fixed and the brewing vessel assembly (101) is moveable towards the liquid outlet to enable adoption of the brewing configuration.

8. The beverage machine (100) according to any one of claims 1 to 7, comprising a damper system configured to control deceleration of the brewing vessel assembly (101) as the brewing vessel assembly approaches the liquid outlet (111) during adoption of the brewing configuration.

9. The beverage machine (100) according to any one of claims 1 to 8, comprising a guiding assembly (117) configured to guide movement of the brewing vessel assembly (101) and the liquid outlet (111) relative to each other during adoption of the brewing configuration; optionally wherein the guiding assembly is configured to guide movement of the brewing vessel assembly and the granular material outlet relative to each other during adoption of the filling configuration.

10. The beverage machine (100) according to claim 9, wherein the movement guided by the guiding assembly (117) comprises translational movement of the brewing vessel assembly (101) between the granular material outlet and the liquid outlet (111); optionally wherein the translational movement comprises a linear translational movement and/or an arcuate translational movement.

11. The beverage machine (100) according to any one of claims 1 to 10, wherein the brewing vessel assembly (101) is manually moveable by a user to adopt the filling configuration.

12. The beverage machine (100) according to claim 11 as according to claim 2 or claim 4, wherein the locking mechanism (123) is lockable, to secure the brewing vessel assembly (101) relative to the granular material outlet in the filling configuration, when the brewing vessel assembly is manually moved by the user to adopt the filling configuration.

13. The beverage machine (100) according to any one of claims 1 to 12, comprising a controller configured to control the hydraulic system (112) to provide said movement of liquid in the hydraulic system that moves the hydraulic mechanism (122).

14. The beverage machine (100) according to claim 13, wherein the controller is configured to control the hydraulic system (112), based on an operation status of the granular material dispenser (105), to provide said movement of liquid in the hydraulic system that moves the hydraulic mechanism (122).

15. The beverage machine (100) according to any one of claims 1 to 14, wherein the granular material dispenser (105) comprises:
a shutter (148) movable between an open position that allows the granular material to be delivered via the granular material outlet and a closed position that blocks delivery of granular material via the granular material outlet;
a position determination element (150) arranged to be triggered by adoption of the filling configuration; and
a shutter mover (151) arranged to cause movement of the shutter from the closed position to the open position in response to the position determination element being triggered by said adoption of the filling configuration.
